# EUROPEAN PATENT SPECIFICATION

(11) **EP 2 646 943 B1**
(45) Date of publication and mention of the grant of the patent: **04.11.2015**
(21) Application number: 11845344.8
(22) Date of filing: 02.12.2011
(51) Int. Cl.: G06F 11/14, G06F 12/16, G06F 17/30

(54) **PROTECTING FILES THAT INCLUDE EDITABLE METADATA**
SCHUTZ VON DATEIEN EINSCHLIESSLICH EDITIERBARER METADATEN
PROTECTION DES FICHIERS COMPRENANT DES MÉTADONNÉES MODIFIABLES

(30) Priority: 02.12.2010 US 958412
(43) Date of publication of application: 09.10.2013
(73) Proprietor: Microsoft Technology Licensing, LLC, Redmond, WA 98052 (US)
(72) Inventor: DOSHI, Apurva Ashwin, Washington 98052-6399 (US); LYAKHOVITSKIY, Grigory Borisovich, Washington 98052-6399 (US)
(74) Representative: Goddar, Heinz J.
(86) International application number: PCT/US2011/063050
(87) International publication number: WO 2012/075385

(56) References cited:
- US-A1- 2004 010 524
- US-A1- 2007 208 918
- US-A1- 2009 199 199
- US-A1- 2009 228 533
- US-A1- 2009 228 533
- US-B1- 7 797 323
- US-B2- 6 823 493
- US-B2- 7 464 126

## Description

### BACKGROUND

Files often include metadata. A change to any portion of the file, including the metadata, may trigger a backup system to copy the file to a backup device. With the size of today's multimedia and other files, creating multiple copies of a file in response to changes to the file may quickly fill up a backup device.

The subject matter claimed herein is not limited to embodiments that solve any disadvantages or that operate only in environments such as those described above. Rather, this background is only provided to illustrate one exemplary technology area where some embodiments described herein may be practiced.

US 2009/0199199 A] relates to a backup procedure with transparent load balancing. Said procedure includes performing a preamble phase in order to determine if a file will be backed up from an agent to a portal and applying a chunking policy on the file, wherein the chunking policy comprising performing chunking of the file of an agent, performing chunking of the file on the portal, or transmitting the file the portal without chunking. In the preamble phase, the metadata pertaining to a file to be backed up is send by a sent file component to a portal via preamble. If the metadata did not change, than a backup agent running on a client will not start to chunk the file as the contents of a file cannot change without its metadata getting af-fected. If the metadata has changed as indicated by a preamble response, than one of the three scenarios can occur.

US 2007/0208918 A1 is directed to a method and an apparatus for providing virtual machine backup. The method starts by reading the current state of the machine, in blocks of a constant size, and creates a "FULL" index of block numbers and a hash value associated with the data within that block, while at the same time creating a FULL backup of the machine (the FULL backup then stored at an off-site target location). Once the FULL index map is defined, sub-sequent DELTA backups are created by reading the current state of the device in the same block fashion and generating updated hash values for each data block. The newly-generated hash values are compared against the values stored in the FULL index map. If the hash num-bers for a particular block do not match, this is an indication that the data within that block has changed since the last FULL backup was created. Once all of the "changed" data blocks have been identified to form a DELTA backup, a communication connection is opened in the network and the DELTA backup is sent to the off-site target location.

US 2009/0228533 A1 discloses file change detection. In particular, a system and method in-cludes selecting a file for potential backing up. A metadata signature is calculated on the se-lected file. The metadata signature of the selected file is compared to a metadata signature of a corresponding file already backed up. The file is only backed up. The file and the signatures do not match.

### SUMMARY

Briefly, aspects of the subject matter described herein relate to data protection of files that may include both content and embedded metadata. In aspects, an indication that a file has changed is received. If the content has changed, the entire file or just the content may be backed up. If the metadata only has changed, the metadata may or may not be backed up, depending on implementation. Instead of parsing the file to determine the exact size and positioning of the metadata within the file, the file may be divided into three portions: a head portion, a middle portion, and a tail portion. Hashes of these portions may then be used to determine whether the metadata and/or content of the file have changed.

This Summary is provided to briefly identify some aspects of the subject matter that is further described below in the Detailed Description. This Summary is not intended to identify key or essential features of the claimed subject matter, nor is it intended to be used to limit the scope of the claimed subject matter.

The invention is defined in detail in the appended independent claims 1, 2 and 3.

The phrase "subject matter described herein" refers to subject matter described in the Detailed Description unless the context clearly indicates otherwise. The term "aspects" is to be read as "at least one aspect." Identifying aspects of the subject matter described in the Detailed Description is not intended to identify key or essential features of the claimed subject matter.

The aspects described above and other aspects of the subject matter described herein are illustrated by way of example and not limited in the accompanying figures in which like reference numerals indicate similar elements and in which:

### BRIEF DESCRIPTION OF THE DRAWINGS

FIGURE 1 is a block diagram representing an exemplary general-purpose computing environment into which aspects of the subject matter described herein may be incorporated;
FIG. 2 is a block diagram that generally represents a file that has metadata and content embedded therein in accordance with aspects of the subject matter described herein;
FIG. 3 is a block diagram that illustrates a file having metadata at the head and several compression blocks thereafter in accordance with aspects of the subject matter described herein;
FIG. 4 is a block diagram that represents an apparatus configured in accordance with aspects of the subject matter described herein; and
FIG. 5 is a flow diagram that generally represents exemplary actions that may occur in accordance with aspects of the subject matter described herein.

### DETAILED DESCRIPTION

### DEFINITIONS

As used herein, the term "includes" and its variants are to be read as openended terms that mean "includes, but is not limited to." The term "or" is to be read as "and/or" unless the context clearly dictates otherwise. The term "based on" is to be read as "based at least in part on." The terms "one embodiment" and "an embodiment" are to be read as "at least one embodiment." The term "another embodiment" is to be read as "at least one other embodiment."

As used herein, terms such as "a," "an," and "the" are inclusive of one or more of the indicated item or action. In particular, in the claims a reference to an item generally means at least one such item is present and a reference to an action means at least one instance of the action is performed.

The term data is to be read broadly to include anything that may be represented by one or more computer storage elements. Logically, data may be represented as a series of 1's and 0's in volatile or non-volatile memory. In computers that have a non-binary storage medium, data may be represented according to the capabilities of the storage medium. Data may be organized into different types of data structures including simple data types such as numbers, letters, and the like, hierarchical, linked, or other related data types, data structures that include multiple other data structures or simple data types, and the like. Some examples of data include information, program code, program state, program data, other data, and the like.

Headings are for convenience only; information on a given topic may be found outside the section whose heading indicates that topic.

Other definitions, explicit and implicit, may be included below.

### EXEMPLARY OPERATING ENVIRONMENT

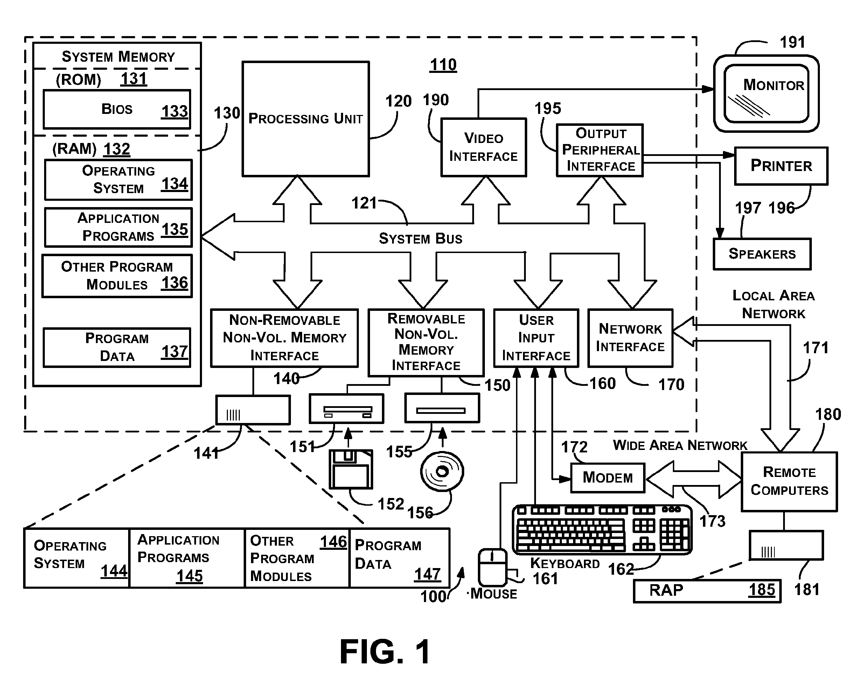

Figure 1 illustrates an example of a suitable computing system environment 100 on which aspects of the subject matter described herein may be implemented. The computing system environment 100 is only one example of a suitable computing environment and is not intended to suggest any limitation as to the scope of use or functionality of aspects of the subject matter described herein. Neither should the computing environment 100 be interpreted as having any dependency or requirement relating to any one or combination of components illustrated in the exemplary operating environment 100.

Aspects of the subject matter described herein are operational with numerous other general purpose or special purpose computing system environments or configurations. Examples of well-known computing systems, environments, or configurations that may be suitable for use with aspects of the subject matter described herein comprise personal computers, server computers, hand-held or laptop devices, multiprocessor systems, microcontroller-based systems, set-top boxes, programmable consumer electronics, network PCs, minicomputers, mainframe computers, personal digital assistants (PDAs), gaming devices, printers, appliances including set-top, media center, or other appliances, automobile-embedded or attached computing devices, other mobile devices, distributed computing environments that include any of the above systems or devices, and the like.

Aspects of the subject matter described herein may be described in the general context of computer-executable instructions, such as program modules, being executed by a computer. Generally, program modules include routines, programs, objects, components, data structures, and so forth, which perform particular tasks or implement particular abstract data types. Aspects of the subject matter described herein may also be practiced in distributed computing environments where tasks are performed by remote processing devices that are linked through a communications network. In a distributed computing environment, program modules may be located in both local and remote computer storage media including memory storage devices.

With reference to Figure 1, an exemplary system for implementing aspects of the subject matter described herein includes a general-purpose computing device in the form of a computer 110. A computer may include any electronic device that is capable of executing an instruction. Components of the computer 110 may include a processing unit 120, a system memory 130, and a system bus 121 that couples various system components including the system memory to the processing unit 120. The system bus 121 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, Peripheral Component Interconnect (PCI) bus also known as Mezzanine bus, Peripheral Component Interconnect Extended (PCI-X) bus, Advanced Graphics Port (AGP), and PCI express (PCIe).

The computer 110 typically includes a variety of computer-readable media. Computer-readable media can be any available media that can be accessed by the computer 110 and includes both volatile and nonvolatile media, and removable and non-removable media. By way of example, and not limitation, computer-readable media may comprise computer storage media and communication media.

Computer storage media includes both volatile and nonvolatile, removable and non-removable media implemented in any method or technology for storage of information such as computer-readable instructions, data structures, program modules, or other data. Computer storage media includes RAM, ROM, EEPROM, flash memory or other memory technology, CD-ROM, digital versatile discs (DVDs) or other optical disk storage, magnetic cassettes, magnetic tape, magnetic disk storage or other magnetic storage devices, or any other medium which can be used to store the desired information and which can be accessed by the computer 110.

Communication media typically embodies computer-readable instructions, data structures, program modules, or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer-readable media.

The system memory 130 includes computer storage media in the form of volatile and/or nonvolatile memory such as read only memory (ROM) 131 and random access memory (RAM) 132. A basic input/output system 133 (BIOS), containing the basic routines that help to transfer information between elements within computer 110, such as during start-up, is typically stored in ROM 131. RAM 132 typically contains data and/or program modules that are immediately accessible to and/or presently being operated on by processing unit 120. By way of example, and not limitation, Figure 1 illustrates operating system 134, application programs 135, other program modules 136, and program data 137.

The computer 110 may also include other removable/non-removable, volatile/nonvolatile computer storage media. By way of example only, Figure 1 illustrates a hard disk drive 141 that reads from or writes to non-removable, nonvolatile magnetic media, a magnetic disk drive 151 that reads from or writes to a removable, nonvolatile magnetic disk 152, and an optical disc drive 155 that reads from or writes to a removable, nonvolatile optical disc 156 such as a CD ROM or other optical media. Other removable/non-removable, volatile/nonvolatile computer storage media that can be used in the exemplary operating environment include magnetic tape cassettes, flash memory cards, digital versatile discs, other optical discs, digital video tape, solid state RAM, solid state ROM, and the like. The hard disk drive 141 may be connected to the system bus 121 through the interface 140, and magnetic disk drive 151 and optical disc drive 155 may be connected to the system bus 121 by an interface for removable non-volatile memory such as the interface 150.

The drives and their associated computer storage media, discussed above and illustrated in Figure 1, provide storage of computer-readable instructions, data structures, program modules, and other data for the computer 110. In Figure 1, for example, hard disk drive 141 is illustrated as storing operating system 144, application programs 145, other program modules 146, and program data 147. Note that these components can either be the same as or different from operating system 134, application programs 135, other program modules 136, and program data 137. Operating system 144, application programs 145, other program modules 146, and program data 147 are given different numbers herein to illustrate that, at a minimum, they are different copies.

A user may enter commands and information into the computer 110 through input devices such as a keyboard 162 and pointing device 161, commonly referred to as a mouse, trackball, or touch pad. Other input devices (not shown) may include a microphone, joystick, game pad, satellite dish, scanner, a touch-sensitive screen, a writing tablet, or the like. These and other input devices are often connected to the processing unit 120 through a user input interface 160 that is coupled to the system bus, but may be connected by other interface and bus structures, such as a parallel port, game port or a universal serial bus (USB).

A monitor 191 or other type of display device is also connected to the system bus 121 via an interface, such as a video interface 190. In addition to the monitor, computers may also include other peripheral output devices such as speakers 197 and printer 196, which may be connected through an output peripheral interface 195.

The computer 110 may operate in a networked environment using logical connections to one or more remote computers, such as a remote computer 180. The remote computer 180 may be a personal computer, a server, a router, a network PC, a peer device or other common network node, and typically includes many or all of the elements described above relative to the computer 110, although only a memory storage device 181 has been illustrated in Figure 1. The logical connections depicted in Figure 1 include a local area network (LAN) 171 and a wide area network (WAN) 173, but may also include other networks. Such networking environments are commonplace in offices, enterprise-wide computer networks, intranets, and the Internet.

When used in a LAN networking environment, the computer 110 is connected to the LAN 171 through a network interface or adapter 170. When used in a WAN networking environment, the computer 110 may include a modem 172 or other means for establishing communications over the WAN 173, such as the Internet. The modem 172, which may be internal or external, may be connected to the system bus 121 via the user input interface 160 or other appropriate mechanism. In a networked environment, program modules depicted relative to the computer 110, or portions thereof, may be stored in the remote memory storage device. By way of example, and not limitation, Figure 1 illustrates remote application programs 185 as residing on memory device 181. It will be appreciated that the network connections shown are exemplary and other means of establishing a communications link between the computers may be used.

### Protecting Files

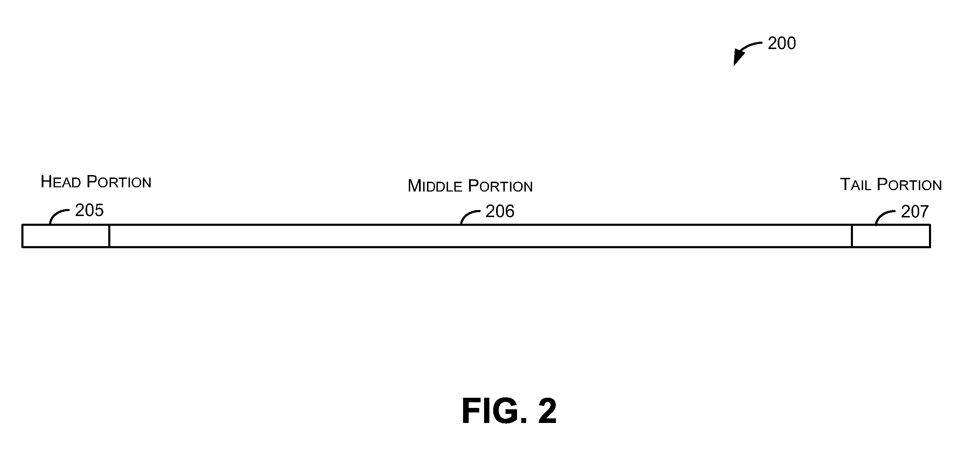

As mentioned previously, creating multiple copies of large files may quickly fill a backup device. FIG. 2 is a block diagram that generally represents a file that has metadata and content embedded therein in accordance with aspects of the subject matter described herein. As illustrated, the file 200 may divided into a head portion 205, a middle portion 206, and a tail portion 207. These portions 205-207 are not drawn to scale.

Many files include or are associated with metadata. Metadata is data about a file rather than the actual content of a file. For example, metadata may include an author, time and date of creation, size, purpose, encoding scheme, color depth, image resolution, a summary of the content of the file, or other data about the file.

Sometimes, metadata is maintained outside of the file. For example, a file system may maintain metadata about files of the file system. This metadata may be maintained in file system data structures rather than embedded in the files themselves.

For some file types, metadata is embedded into (e.g., placed inside) the file itself. Furthermore, different file types (e.g., .mp3, .wav, .pdf, .tiff, .bmp, .mov, and the like) may have different amounts of metadata. The same file type may have different amounts of metadata for different instances of files of the file type.

When metadata is embedded in a file instead of stored in a separate place, the metadata is often placed at the beginning or end of the file. Detecting whether only the metadata has changed may be used to determine whether a file needs to be backed up, and if so, what is to be backed up for the file.

For example, to conserve backup space, some users may desire to not create a backup copy of a file when only the metadata of the file changes. For example, the metadata "star" rating of a multimedia file while useful may not be as important to a user as changes to the content of the file.

As described herein, one mechanism for determining whether the metadata of a file has changed includes computing two hashes for the file. In particular, a head hash may be computed for the head portion 205 of the file 200 and a tail hash may be computed for the tail portion 207 of the file 200. If the head hash is equal to a previously computed head hash of the file and the tail hash is equal to a previously computed tail hash of the file, the metadata of the file 200 is said to have not changed.

Another mechanism for determining whether the metadata of a file has changed includes computing a hash for the head portion or the tail portion of the file but not both. In particular, in one implementation, a head hash is computed for only the head portion 205 of the file 200. If the head hash is equal to a previously computed head hash of the file 200, the metadata of the file 200 is said to have not changed. In this implementation, the tail portion 207 of the file 200 may be included in a content portion that includes the middle portion 206 and the tail portion 207. This implementation may be used, for example, in cases where metadata is expected at the head of a file.

In another implementation, a tail hash is computed for only the tail portion 207 of the file 200. If the tail hash is equal to a previously computed tail hash of the file 200, the metadata of the file 200 is said to have not changed. In this implementation, the head portion 205 of the file 200 may be included in a content portion that includes both the head portion 205 and the middle portion 206. This implementation may be used, for example, in cases where metadata is expected at the tail of a file.

In implementations where both a head hash and a tail hash may be computed, the content portion of the file 200 includes only the middle portion 206 of the file 200. A content hash is a hash that is computed on what is designated as a content portion and may include just the middle portion 206, the middle portion 206 and the head portion 205, or the middle portion 206 and the tail portion 207.

A hash is output data that may be produced by applying a set of operations (e.g., addition, multiplication, division, subtraction, shifting bits, and so forth) to input data. Computing a hash is synonymous with applying the set of operations to the input data to obtain the output data. Normally, the input data is much larger than the output data. Furthermore, the input data may be of variable size while the output data may be a fixed size. A function that produces a hash (sometimes called a hash function) is deterministic: meaning for a given input data, the hash function will generate the same output data. Although hash functions may map two or more different input data to the same output data, the hash function may be selected to ensure that the probability of this occurring is relatively small. With these properties, a hash may be used to detect whether a file (or portion thereof) has changed by comparing two separate hashes of data of the file without comparing each byte of the file to its corresponding byte in a previous version of the file.

If either the head hash or the tail hash is not equal to its corresponding previously computed hash, an additional check may be performed to determine whether just the metadata changed or whether the metadata and content of the file changed. This additional check involves computing a hash for the middle portion 206 of the file 200 and comparing this hash to a previously computed hash for the middle portion 206 of the file 200.

If the middle hash is equal to the previously computed middle hash, then the metadata only is deemed to have changed. If the middle hash is not equal to the previously computed middle hash, then the content is deemed to have changed in addition to, or instead of, the metadata.

Selecting a length that is considered the head portion 205 of the file 200 and selecting a length that is considered the tail portion of the file 200 may be performed in various ways. One exemplary way described herein is selecting the length based on a compression block size as described below.

To conserve space, multimedia and other files may have content that is compressed. The content may be compressed using a compression algorithm that uses a compression block size. To view and edit content, the content or more of the blocks may be decompressed. If any of this decompressed content is changed, the compression algorithm may compress the changed content such that the original compressed content and the new compressed content are significantly or totally different--even if very little decompressed content was changed. Furthermore, changes made to content in one block may, during compression, have effects on other blocks throughout the file.

This compression of multimedia files with embedded metadata may be used for the selection of the length that is considered the head portion 205 and the length that is considered the tail portion 207 of the file 200. To detect that just the metadata has changed, a length equal to the metadata may be selected. However, because the length of the metadata may change from file type to file type or even from file to file within the same file type, selecting a length exactly equal to the length of the metadata may involve having an understanding regarding the structure of the metadata and being able to parse through the metadata to determine its length.

Selecting a length that is often or always less than the length of the metadata may trigger a backup mechanism to create a backup copy even for changes to the metadata. As an extreme example, if the length selected was one byte, then any changes past the first byte of the head portion 205 or before the last byte of the tail portion 207 would be considered a change of the content of the file rather than the metadata. A change to the content may trigger a backup mechanism to create a backup copy of the file.

Selecting a length that is expected to often or always be larger than the length of the metadata but smaller than the compression block size has the effect of detecting a change in the metadata without frequently (or ever) ascribing a change to the content as a change to the metadata. This conclusion is derived from the above observation regarding compression algorithms: that even the smallest change in content may change the compressed content of an entire block on disk or even the entire compressed content of the file on disk.

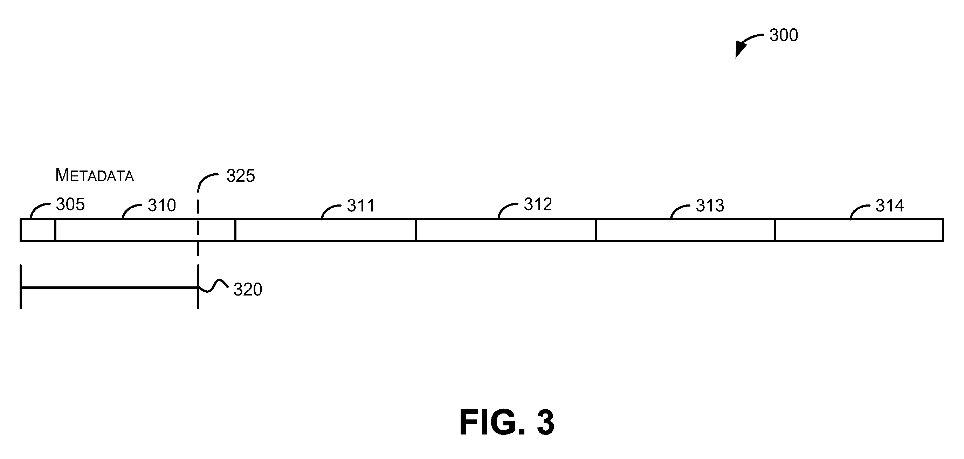

FIG. 3 is a block diagram that illustrates a file having metadata at the head and several compression blocks thereafter in accordance with aspects of the subject matter described herein. As illustrated, the file 300 includes embedded metadata 305 and content that has been compressed in compression blocks 310-314. A length 320 has been selected as the size of the head portion of the file 300. The length 320 as illustrated is slightly less than the compression block size.

If just the metadata 305 changes, a hash of data having the length 320 at the head of the file 300 detects this change but may not be sufficient to determine whether the change occurred in the metadata 305 or the content of the file 300. For example, a change in data anywhere before point 325 may cause the hash of the head portion to be different from a previously-computed hash of the head portion. The head portion has the length 320 from the start of the file and is larger than the metadata 305. In this case, to detect whether the change occurred in the metadata 305 or in content past the metadata 305, another hash of the middle portion (which includes the data past point 325) may also be computed.

Computing a hash of the middle portion is effective in determining whether the metadata or content changed because of the nature of compression algorithms. In particular, if data past the metadata 305 but before the point 325 is changed, during compression, this may cause a significant change to the data in the compression block 310 even past the point 325. A change in the metadata 305 only, however, will not generally have any effect on data in the compression block 310 as the metadata is normally not in a compression block. Thus, if only the metadata 305 changes, the compression block 310 will not change and the middle hash will be equivalent to a previously-computed middle hash.

If, on the other hand, data anywhere past the metadata 305 and before the point 325 changes, during compression, this will cause a significant change in data throughout the compression block 310. Thus, a hash of the head portion (the portion before point 325) and a hash of the middle portion (the portion after the point 325) will both detect this change. If both hashes show changed data, a data protection engine may conclude that at least the content of the file changed and perhaps the content and the metadata of the file also changed. Since the content changed, the file needs to be backed up.

Following are some exemplary ways to select the length 320:

1. Select a length that is equal to or smaller than a compression block size that is common among large multimedia files. For example, for some multimedia files, 64 kilobytes, 128 kilobytes, 256 kilobytes, or some other size may be a common compression block size.

2. Select a length by using a data structure (such as a table) that associates file extensions with length. The data structure may associate one or more file extensions with each length. For example, video files having certain extensions may be associated with one length, audio files with certain extensions maybe associated with another length, video files and audio files with certain extensions may be associated with yet another length, and so forth. The data structure may also specify a default length to use if the data structure does not have a specific length for a given file extension.

3. Select a length by reading the metadata itself and determining therefrom the length of the metadata. This may involve one or more components that are capable of reading metadata for different types of files.

Returning to FIG. 2, some file formats may add new or changed data to the end of the file (e.g., after the tail portion 207). In these cases, a data protection engine may maintain data that indicates where the tail portion 207 starts and how long the tail portion 207 is and may perform hashes on the tail portion 207 using this information. In other words, the hash may be computed based on the position of the original tail portion instead of defining the tail portion 207 as being a length from the end of the file. If the amount of data added after the tail portion 207 exceeds a configurable threshold, the tail portion 207 may be again measured from the end of the file.

The hashes that have been computed for a file may be stored in a record for use in comparing with subsequent hashes computed for the file. In one embodiment, a data protection engine may create a backup copy of a file if the content of the file has changed and may not create a backup copy of the file if only the metadata of the file has changed (as indicated by the hashes).

If another embodiment, a data protection engine may create a backup copy of each portion of the file that has changed. For example, if the metadata has changed, the data protection engine may create a backup copy of the metadata. If the content of the file has changed, the data protection engine may make a backup copy of the content of the file. In this embodiment, a file may be treated as three files for backup purposes. If any "portion" of the file changes, that portion is backed up. A block list may include identifiers to the portions of the file that are included in various versions of the file. In this embodiment, the length of the head and tail may be selected to be at least as large as the largest anticipated metadata length.

Where the metadata and content may be backed up independently, a backup manager may be able to show changes to the metadata in a user interface. For example, the backup manager may display two side-by-side windows or other user interface elements that show two versions of the metadata.

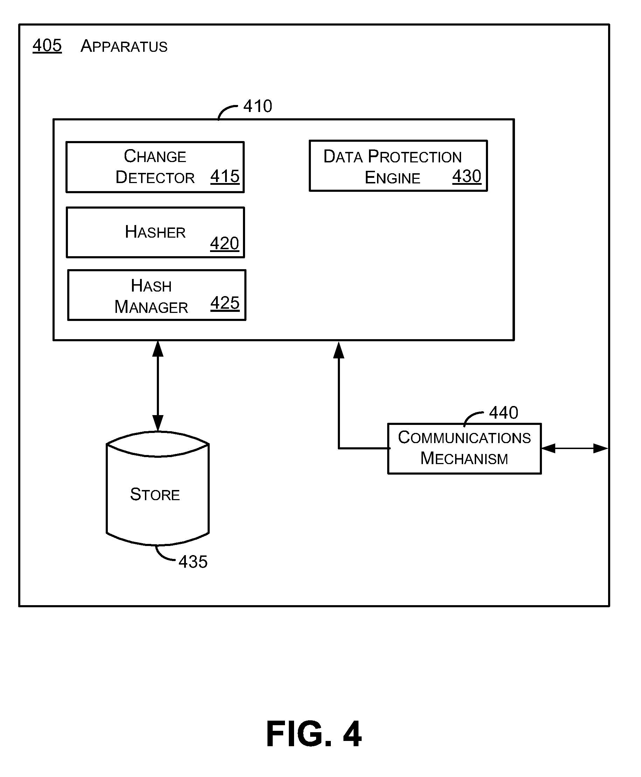

FIG. 4 is a block diagram that represents an apparatus configured in accordance with aspects of the subject matter described herein. The components illustrated in FIG. 4 are exemplary and are not meant to be all-inclusive of components that may be needed or included. In an embodiment, the components described in conjunction with FIG. 4 may be included in other components (shown or not shown) or placed in subcomponents. In some embodiments, the components and/or functions described in conjunction with FIG. 4 may be distributed across multiple devices.

Turning to FIG. 4, the apparatus 405 may include data protection components 410, a store 435, a communications mechanism 440, and other components (not shown). The apparatus 405 may be implemented on or as a computer (e.g., as the computer 110 of FIG. 1).

The communications mechanism 440 allows the apparatus 405 to communicate with other entities. For example, the communications mechanism 440 may allow the apparatus to communicate with one or more devices (e.g., network attached storage, a storage area network device, a file server, or the like) that store backup copies of files included on the store 435. The communications mechanism 440 may be a network interface or adapter 170, modem 172, USB or other port, or any other mechanism for establishing communications as described in conjunction with FIG. 1.

The store 435 is any storage media capable of storing data. The store 435 may be implemented as a file system, database, volatile memory such as RAM, other storage, some combination of the above, and the like and may be distributed across multiple devices. The store 435 may be external, internal, or include components that are both internal and external to the apparatus 405.

The data protection components 410 may include a change detector 415, a hasher 420, a hashing manager 425, a data protection engine 430, and other components (not shown). As used herein, the term component is to be read to include hardware such as all or a portion of a device, a collection of one or more software modules or portions thereof, some combination of one or more software modules or portions thereof and one or more devices or portions thereof, and the like.

The change detector 415 is a component that detects whether changes have occurred to files of a protected namespace. For example, the change detector 415 may use timestamps, may monitor changes made to the file system, or may use other mechanisms to determine whether changes have occurred. Based on the teachings herein, those skilled in the art may recognize other ways for detecting whether changes have occurred to files that may be used.

When the change detector 415 determines that a file has changed, the change detector 415 may inform the data protection engine that the file has changed. To determine whether the metadata and/or content of the file have changed, the data protection engine 430 may employ the hash manager 425.

The hash manager 425 is operable to use the hasher 420 to generate hashes to determine what has changed in a file. The hash manager 425 may provide the hasher 420 with portions of the file for input and may obtain as output different hashes corresponding to the input. For example, the hasher 420 may provide the hasher 420 with data of a head, tail, and middle portions of the file and obtain a head hash, tail hash, and middle hash in response thereto.

The hash manager 425 may store previously computed hashes to compare against subsequently computed hashes to determine that what has changed in a file. For example, if the head hash is equal to the previously computed head hash of the file and the tail hash of the file is equal to the previously computed tail hash of the file, the hash manager 425 may determine that the content of the file has changed and may indicate this to the data protection engine 430.

If either the head hash or the tail hash of the file has changed, the hash manager 425 may determine that at least the metadata of the file has changed and may be further operable to obtain a middle hash of a middle portion of the file and to compare the middle hash with a previously computed middle hash of the file. If the middle hash is equal to a previously computed middle hash, the hash manager 425 may indicate that metadata only has changed; otherwise, the hash manager 425 may indicate that both the metadata and the content of the file have changed.

In one embodiment, the hash manager 425 may use a preselected fixed length for the head and tail portions of the file. The fixed length may be independent of a size of the metadata of the file and may be selected (e.g., by a developer or the like) based on the anticipated compression block sizes of a compression algorithm used for content of files.

In another embodiment, the hash manager 425 may obtain the length of the head and/or tail portions by using an extension of the file to obtain the length from a data structure that associates file extensions with lengths.

In selecting a starting position of the tail portion, the hash manager 425 may use the previous starting position of the tail portion of the file. As mentioned previously, this may be useful where data has been added to the end of the file.

The hasher 420 is any component operable to receive data and to produce a hash based thereon by performing a set of operations on the data. In performing the operations, the hasher 420 may update a variable as the hasher 420 with results of operations on various portions of the data. As mentioned previously, in one embodiment, a hash function may receive data of a variable length and produce therefrom output data that is a fixed sized independent of the variable length.

The data protection engine 430 is operable to create a backup copy of the content and/or the metadata based on what the hash manager indicates has changed. For example, in one embodiment, the data protection engine 430 may create a backup copy of both the content and embedded metadata if the hash manager indicates that the content of the file has changed. In another embodiment, the data protection engine 430 may create a backup copy of the metadata only if only the metadata has changed. In another embodiment, the data protection engine 430 may treat the file as three separate files (for backup purposes) and may backup only changed portions of the file.

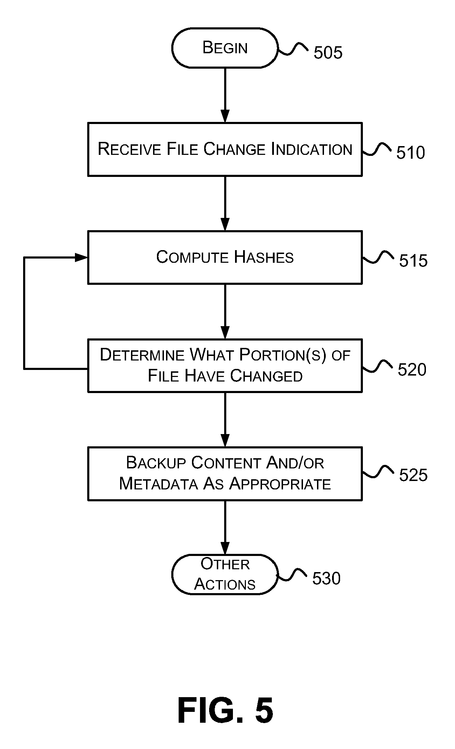

FIG. 5 is a flow diagram that generally represents exemplary actions that may occur in accordance with aspects of the subject matter described herein. For simplicity of explanation, the methodology described in conjunction with FIG. 5 is depicted and described as a series of acts. It is to be understood and appreciated that aspects of the subject matter described herein are not limited by the acts illustrated and/or by the order of acts. In one embodiment, the acts occur in an order as described below. In other embodiments, however, the acts may occur in parallel, in another order, and/or with other acts not presented and described herein. Furthermore, not all illustrated acts may be required to implement the methodology in accordance with aspects of the subject matter described herein. In addition, those skilled in the art will understand and appreciate that the methodology could alternatively be represented as a series of interrelated states *via* a state diagram or as events.

Turning to FIG. 5, at block 505, the actions begin. At block 510, a file change indication is received. For example, referring to FIG. 4, the change detector 415 may detect that a change has occurred to a file on the store 435.

At block 515, hashes for the file are computed. For example, referring to FIG. 4, the hash manager 425 may instruct the hasher 420 to compute hashes for the head, tail, and/or middle portions of a file. As mentioned previously, in one embodiment, the length that represents the head and tail portions of the file may be selected by a developer or the like prior to runtime and may be independent of a file's type (e.g., used regardless of the file's type). In another embodiment, the length may be obtained by using the file's extension to obtain the length from a data structure that associates file extensions with lengths.

Computing the hashes may be done in stages. The line from block 520 to block 515 indicates this type of implementation. For example, initially, a hash may be computed for the head of a file. If the hash is not equal to a previously computed head hash, this indicates that at least the metadata has changed. At this point, a middle hash may be computed of the middle portion of the file. If this middle hash is not equivalent to previously computed middle hash, this indicates that both the metadata and the content of the file have changed.

If, on the other hand, the head hash is equal to the previously computed head hash, a tail hash may be computed. If the tail hash is not equivalent to the previously generated tail hash, this means the at least the metadata has changed and further checks may be performed to determine whether the content has also changed.

If, however, both the head hash is equivalent to the previously computed head hash and the tail hash is equivalent to the previously computed tail hash and the file has changed (as indicated by a change detector), this means that the content of the file has changed. In this case, there may be no need to generate the middle hash as the other conditions can be used to deduce that the content has changed. In this case, in one embodiment, the entire file included the content and metadata may be backed up. In another embodiment, just the content may be backed up.

Instead of computing the head hash first, the tail hash may be computed first with similar actions following depending on results of comparing hashes to previously generated hashes.

At block 520, a determination is made as to what portion(s) of the file has changed. For example, using the hashes returned by the hasher 420, the hash manager 425 may determine whether the content, the metadata, or both the content and the metadata for a file have changed. For example, checking whether the head hash is equal to a previously computed head hash of the file and the tail hash is equal to a previously computed tail hash of the file may indicate whether only the content of the file has changed. For example, if both of these conditions are true (and the file has changed), it maybe determined that the content of the file has changed.

If either of these conditions is not true, then it is deemed that at least the metadata has changed and additional actions may be performed to determine whether the content also has changed.

At block 525, a backup copy of the content and/or metadata may be created. For example, referring to FIG. 4, the data protection engine 430 may make a backup copy of the content and/or metadata of a file on the store 435 that has changed. If the metadata only of the file has changed, the data protection engine 430 may backup the just the metadata or refrain from creating a backup copy of any portion of the file depending on implementation. This may involve backing up just the head portion of the file or just the tail portion of the file depending on hashes that indicate whether just these portions have changed.

At block 530, other actions, if any, may be performed.

As can be seen from the foregoing detailed description, aspects have been described related to data protection. While aspects of the subject matter described herein are susceptible to various modifications and alternative constructions, certain illustrated embodiments thereof are shown in the drawings and have been described above in detail. It should be understood, however, that there is no intention to limit aspects of the claimed subject matter to the specific forms disclosed, but on the contrary, the intention is to cover all modifications, alternative constructions, and equivalents.

## Claims

1. A method implemented at least in part by a computer, the method comprising:
determining whether to backup a file (200; 300), the file including at least a content segment having content data and a metadata segment having metadata that describes the content data, the determining including:
computing a metadata hash of at least a portion of the metadata segment of the file;
computing a content hash of at least a portion of the content segment of the file;
determining whether the metadata has changed based at least in part on whether the metadata hash is equal to a previously computed metadata hash; and
determining whether the content data has changed based at least in part on whether the content hash is equal to a previously computed content hash; and
selectively initiating backup of the file, the selective initiation including:
in response to determining that the content segment has not changed and that the metadata segment has changed, not initiating backup of the file; and
in response to determining that the content segment has changed and that the metadata segment has not changed, initiating backup of the file.

2. A computer storage medium having computer-executable instructions recorded thereon, which, when executed on a computer, perform the method according to claim 1.

3. A system for use in a computing environment, comprising:
a change detector (415) operable to determine that a file that includes at least a content segment having content data and a metadata segment having metadata that describes the content data has changed;
a hasher (420) operable to receive data and to produce a hash based thereon by performing a set of operations on the data;
a hash manager (425) operable to use the hasher to compute a content hash of at least a portion of the content segment of the file and a metadata hash of at least portion of the metadata segment of the file, the hash manager further operable to make a comparison of the metadata hash to a previously computed metadata hash of the file, and a comparison of the content hash to a previously computed content hash of the file, the hash manager further operable to indicate whether content and/or metadata of the file has changed based on the comparisons; and
a data protection engine (430) operable to selectively initiate a backup of the file, the selective initiation including in response to determining that the content segment has not changed and that the metadata segment has changed, not initiating backup of the file ; and in response to determining that the content segment has changed and that the metadata segment has not changed, initiating backup of the file.

## Patentansprüche

1. Zumindest teilweise durch einen Computer implementiertes Verfahren, wobei das Verfahren umfasst:
Bestimmen, ob eine Datei (200; 300) gesichert werden soll, wobei die Datei zumindest ein Inhaltssegment mit Inhaltsdaten und ein Metadatensegment mit Metadaten, die die Inhaltsdaten beschreiben, enthält, wobei das Bestimmen enthält:
Berechnen eines Metadaten-Hash von zumindest einem Teil des Metadatensegments der Datei;
Berechnen eines Inhalts-Hash von zumindest einem Teil des Inhaltssegments der Datei;
Bestimmen, ob sich die Metadaten geändert haben, zumindest teilweise basierend darauf, ob der Metadaten-Hash einem vorangehend berechneten Metadaten-Hash gleicht; und
Bestimmen, ob sich die Inhaltsdaten geändert haben, basierend zumindest teilweise darauf, ob der Inhalts-Hash einem vorangehend berechneten Inhalts-Hash gleicht;
selektives Initiieren einer Sicherung der Datei, wobei dies selektive Initiieren enthält:
als Antwort auf Bestimmen, dass sich das Inhaltssegment nicht geändert hat und dass sich das Metadatensegment geändert hat, kein Initiieren einer Sicherung der Datei;
als Antwort auf Bestimmen, dass sich das Inhaltssegment geändert hat und dass sich das Metadatensegment nicht geändert hat, Initiieren einer Sicherung der Datei.

2. Computerspeichermedium mit darauf gespeicherten von einem Computer ausführbaren Befehlen, die, wenn sie auf einem Computer ausgeführt werden, das Verfahren gemäß Anspruch 1 ausführen.

3. System zur Verwendung in einer Rechnerumgebung, umfassend:
einen Änderungsdetektor (415), der fähig ist, zu bestimmen, dass sich eine Datei geändert hat, die zumindest ein Inhaltssegment mit Inhaltsdaten und ein Metadatensegment mit Metadaten, die die Inhaltsdaten beschreiben, enthält;
eine Hash-Einrichtung (420), die fähig ist, Daten zu empfangen und basierend darauf durch Durchführen einer Gruppe von Operationen an den Daten einen Hash zu erzeugen;
einen Hash-Manager (425), der fähig ist, die Hash-Einrichtung zum Berechnen eines Inhalts-Hash von zumindest einem Teil des Inhaltssegments der Datei und eines Metadaten-Hash von zumindest einem Teil des Metadatensegments der Datei zu verwenden, wobei der Hash-Manager ferner fähig ist, einen Vergleich des Metadaten-Hash mit einem vorangehend berechneten Metadaten-Hash der Datei und einen Vergleich des Inhalts-Hash mit einem vorangehend berechneten Inhalts-Hash der Datei vorzunehmen, wobei der Hash-Manager ferner fähig ist, basierend auf den Vergleichen anzuzeigen, ob sich Inhalts- und/oder Metadaten der Datei geändert haben; und
eine Datenschutz-Engine (430), die fähig ist, um eine Sicherung der Datei selektiv zu initiieren, wobei das selektive Initiieren als Antwort auf Bestimmen, dass sich das Inhaltssegment nicht geändert hat und dass sich das Metadatensegment geändert hat, kein Initiieren einer Sicherung der Datei und als Antwort auf Bestimmen, dass sich das Inhaltssegment geändert hat und dass sich das Metadatensegment nicht geändert hat, Initiieren einer Sicherung der Datei enthält.

## Revendications

1. Procédé exécuté au moins en partie par un ordinateur, le procédé comprenant :
la détermination du fait qu'un fichier (200 ; 300) soit sauvegardé ou non, le fichier comprenant au moins un segment de contenu qui possède des données de contenu et un segment de métadonnées qui possède des métadonnées qui décrivent les données de contenu, la détermination comprenant :
le calcul d'un hachage de métadonnées d'au moins une partie du segment de métadonnées du fichier ;
le calcul d'un hachage de contenu d'au moins une partie du segment de contenu du fichier ;
la détermination du fait que les métadonnées aient changé, sur la base, au moins en partie, du fait que le hachage de métadonnées soit égal à un hachage de métadonnées précédemment calculé ; et
la détermination du fait que les données de contenu aient changé, sur la base, au moins en partie, du fait que le hachage de contenu soit égal à un hachage de contenu précédemment calculé ; et
le déclenchement sélectif de la sauvegarde du fichier, le déclenchement sélectif comprenant :
en réponse à la détermination du fait que le segment de contenu n'ait pas changé et que le segment de métadonnées ait changé, le non-déclenchement de la sauvegarde du fichier ; et
en réponse à la détermination du fait que le segment de contenu ait changé et que le segment de métadonnées n'ai pas changé, le déclenchement de la sauvegarde du fichier.

2. Support de stockage informatique qui contient des instructions exécutables par un ordinateur et enregistrées dessus et qui, lorsqu'elles sont exécutées sur un ordinateur, exécutent le procédé selon la revendication 1.

3. Système destiné à être utilisé dans un environnement informatique, qui comprend :
un détecteur de changement (415) capable de déterminer qu'un fichier qui comprend au moins un segment de contenu qui possède des données de contenu et un segment de métadonnées qui possède des métadonnées qui décrivent les données de contenu a changé ;
hacheur (420) capable de recevoir des données et de produire un hachage sur la base de celles-ci en effectuant un ensemble d'opérations sur les données ;
gestionnaire de hachage (425) capable d'utiliser le hacheur pour calculer un hachage de contenu d'au moins une partie du segment de contenu du fichier, et un hachage de métadonnées d'au moins une partie du segment de métadonnées du fichier, le gestionnaire de hachage étant en outre capable d'effectuer une comparaison entre le hachage de métadonnées et un hachage de métadonnées précédemment calculé du fichier, et une comparaison entre le hachage de contenu et un hachage de contenu précédemment calculé du fichier, le gestionnaire de hachage étant en outre capable d'indiquer si le contenu et/ou les métadonnées du fichier ont changé, sur la base des comparaisons ; et
un moteur de protection des données (430) capable de déclencher sélectivement une sauvegarde du fichier, le déclenchement sélectif comprenant, en réponse à la détermination du fait que le segment de contenu n'ait pas changé et que le segment de métadonnées ait changé, le non-déclenchement de la sauvegarde du fichier ; et, en réponse à la détermination du fait que le segment de contenu ait changé et que le segment de métadonnées n'ait pas changé, le déclenchement de la sauvegarde du fichier.
